Europäisches Patentamt

European Patent Office

Office européen des brevets

(19)

(11) Numéro de publication : **0 140 753**
**B1**

(12) # FASCICULE DE BREVET EUROPÉEN

(45) Date de publication du fascicule du brevet :
02.03.88

(51) Int. Cl.⁴ : **H 04 L 27/22**, H 04 N 7/04

(21) Numéro de dépôt : **84401886.1**

(22) Date de dépôt : **21.09.84**

(54) **Procédé et dispositif de démodulation cohérente de porteuse à modulation numérique.**

(30) Priorité : **21.09.83 FR 8315019**

(43) Date de publication de la demande :
**08.05.85 Bulletin 85/19**

(45) Mention de la délivrance du brevet :
**02.03.88 Bulletin 88/09**

(84) Etats contractants désignés :
**CH DE GB IT LI NL SE**

(56) Documents cités :
**FR-A- 2 113 933**
**FR-A- 2 459 594**
**US-A- 3 525 945**
**IEE PROCEEDINGS SECTION AAI, vol. 129, no. 5, partie F, octobre 1982, pages 366-367, Old Woking, Surrey, GB; M. KAVEHRAD: "Phase-noise effects on QPSK carriers- in burst transmission"**
**PATENTS ABSTRACTS OF JAPAN, no. 115(E-86), 1978, page 115E86 & JP-A-53 136 949**
**IEE PROCEEDINGS SECTION AAI, vol. 129, no. 7, partie A, septembre 1982, pages 528-531, Old Woking, Surrey, GB; M.D. WINDRAM: "Multiple sound channels in satallite broadcasting"**
**PATENTS ABSTRACTS OF JAPAN, vol. 3, no. 6(E-85), 22 janvier 1979, page 87E85 & JP-A-53 134 353**
**A. BLANCHARD: "Phase-locked loops. Application to coherent receiver design", 1976, pages 279-290, John Wiley & Sons, New York, USA**

(73) Titulaire : **Veillard, Jacques**
**La Viseule Montgermont**
**F-35760 Saint Gregoire (FR)**

**Etablissement Public de Diffusion dit "Télédiffusion de France"**
**21-27 rue Barbès**
**F-92120 Montrouge (FR)**

(72) Inventeur : **Veillard, Jacques**
**La Viseule Montgermont**
**F-35760 Saint Gregoire (FR)**

(74) Mandataire : **Fort, Jacques et al**
**CABINET PLASSERAUD 84, rue d'Amsterdam**
**F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**0 140 753**

## Description

L'invention concerne la démodulation cohérente de porteuse à modulation numérique par déplacement de phase ou par déplacement de fréquence à phase continue, porteuse émise par salves régulièrement espacées dans le temps, avec continuité de la phase d'une salve à la suivante. La modulation numérique par déplacement de phase peut être de n'importe lequel des types couramment utilisés : il peut notamment s'agir de la modulation MDP 2-4, dans lequel la porteuse est modulée par des sauts de phase de 90°.

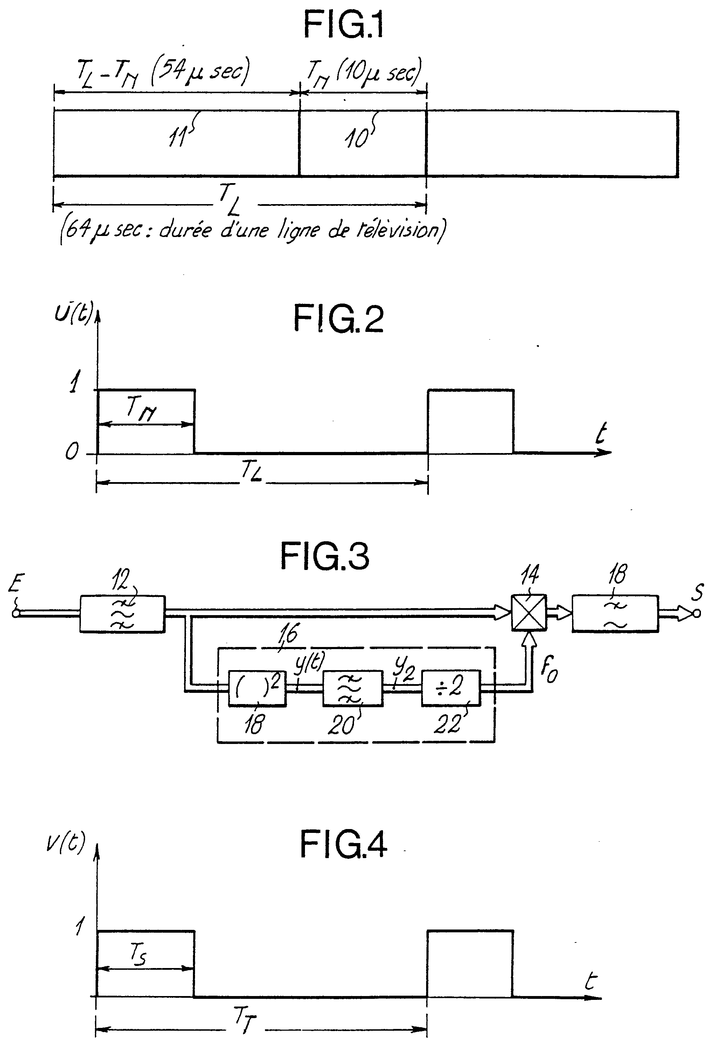

L'invention trouve une application particulièrement importante dans le domaine de la radiodiffusion par satellite utilisant un signal diffusé qui consiste en un multiplexage temporel entre une porteuse analogique 11 modulée en fréquence par le signal d'image pendant la durée active d'une ligne de télévision et une porteuse numérique 10 émise pendant l'intervalle de suppression (système « C » dans la terminologie UER). La constitution d'un multiplex de ce genre est décrite par exemple dans l'article « Multiple sound channels in satellite broadcasting » (IEEE Proc. Vol. 129, Pt A, No. 7, sept 1982, pp 528-531). Le diagramme des temps d'un multiplex de ce type apparaît sur la Figure 1. Ce système permet de diffuser huit voies numériques son de haute qualité associées à l'image de télévision. Les caractéristiques d'un des systèmes normalisés sont les suivantes :

| | |
|---|---|
| Modulation de l'image : | Modulation de fréquence |
| Modulation de la porteuse numérique : | MDP 2-4 |
| Débit instantané de la porteuse numérique : | 20, 25 Mbits/s |
| Durée d'une salve : | 9,97 µsec |

Dans le cas où la synchronisation est émise pendant la trame, la durée entière de la salve peut être consacrée à l'émission des données utiles. Il n'est pas nécessaire d'émettre un préambule au début de chaque salve comme cela est classiquement réalisé dans les systèmes à accès multiple par répartition dans le temps (AMRT).

On connaît déjà divers procédés de démodulation applicables à la radiodiffusion par satellite en système C, notamment utilisant la modulation MDP 2-4 actuellement proposée.

Parmi ces procédés, la démodulation différentielle est actuellement mise en avant, parce que plus simple à mettre en œuvre que la démodulation cohérente. Mais, en contrepartie, la démodulation différentielle présente des performances vis-à-vis du bruit inférieures à celles de la démodulation cohérente. En particulier, en radiodiffusion par satellite, la démodulation différentielle ne permet pas d'assurer une télédiffusion simultanée de l'image et du son dès que le rapport porteuse à bruit est inférieur à une valeur plus élevée que dans le cas de la démodulation cohérente. On a constaté expérimentalement que l'interruption de service pour le son avait lieu pour un rapport porteuse à bruit égal à 7,0 dB environ avec une démodulation différentielle égal à 5,5 dB pour une démodulation cohérente, dans un canal de 27 MHz.

L'invention vise notamment à fournir un procédé de démodulation cohérente, c'est-à-dire du type suivant lequel on récupère la fréquence de porteuse par élévation au carré de la porteuse et sélection de la fréquence de porteuse dans le spectre obtenu, qui conserve une immunité au bruit plus grande que les procédés de démodulation différentielle et, en même temps, présente une sécurité de fonctionnement accrue en ce qui concerne notamment la récupération de la porteuse.

Avant de décrire l'invention, il peut être utile de rappeler le principe de fonctionnement des démodulateurs cohérents.

Si on suppose la porteuse modulée 10 émise pendant des salves de durée $T_N$ avec une période de répétition $T_L$, la porteuse peut s'écrire :

$$x(t) = u(t) \cdot s(t)$$

où u(t) est un signal périodique dont l'allure est montrée en Figure 2, de période $T_L$, tel que

$$u(t) = 1 \text{ pour } t \in [0, T_N]$$

$$u(t) = 0 \text{ pour } t \in [0, T_N].$$

Dans le cas d'une démodulation MDP-2 à deux états de phase, s(t) a pour expression :

$$s(t) = A\Sigma a_k \ r(t - kT) \cdot \cos (2 \pi f_0 \ t + \varphi_0)$$

avec :
$a_k = \pm 1$ suivant l'élément binaire transmis,
A : amplitude de la porteuse.
$f_0$ : fréquence de la porteuse.

2

$\varphi_0$ : phase à l'origine,

r(t) : forme d'onde du symbole transmis,

T : durée d'un élément binaire.

Dans le cas d'une modulation de type MDP 2-4 ou MSK, s(t) peut se mettre sous la forme générale :

$$s(t) = A\Sigma a_k\ r(t - kT) \cdot \cos\ (2\ \pi f_0\ t + \varphi_0 - K\pi/2)$$

La démodulation cohérente peut s'effectuer en faisant le produit du signal modulé par la porteuse récupérée, dont la fréquence est $f_0$ dans le cas d'une modulation MDP-2 et $(f_0 - 1/4T)$ dans le cas d'une modulation MDP 2-4 ou MSK.

Cette démodulation peut être effectuée par un circuit du genre montré en Figure 3 comportant, à partir de l'entrée de la porteuse modulée, un filtre passe-bande 12 dont la sortie est appliquée, d'une part, à un multiplicateur 14, d'autre part à un circuit de récupération de porteuse 16. La sortie du circuit 16 est appliquée à la seconde entrée du multiplicateur et la sortie de celui-ci attaque un filtre passe-bas 18 dont la sortie S fournit le signal démodulé. Le circuit 16 utilise classiquement le mode de récupération de porteuse d'un signal modulé à deux états par élévation au carré de cette porteuse, par exemple à l'aide d'un multiplicateur analogique 18, extraction de la composante du signal de sortie à fréquence proche d'une valeur $2f_1$ fonction de $f_0$ à l'aide d'un filtre 20 et, enfin, division par deux à l'aide d'un diviseur 22.

On voit en effet que le signal obtenu en sortie de multiplicateur 18 contient une composante, autour de la fréquence $2f_1$, qui a pour expression :

$$y(t) = Bu(t) \cdot \cos\ (2\omega_1\ t + 2\ \varphi_0)$$

avec : $\omega_1 = 2\ \pi f_1$

et $\quad f_1 = f_0$ en modulation MDP-2

$\quad f_1 = f_0 - 1/4T$ pour les modulations de type MDP 2-4 ou MSK

Le signal d'émission des salves u (t) peut se décomposer en série de Fourier et s'écrire :

$$u(t) = a_0 + \sum_{n=1}^{\infty} C_n \cos\ \left( n\frac{2\ \pi T}{T_L} - \varphi_n \right)$$

Il en résulte que le signal y(t) est formé d'une somme de signaux sinusoïdaux de fréquences $2f_1 \pm n/T_L$

$$y(t) = B \left\{ \alpha_0 \cos\ (2\ \omega_1\ t + 2\ \varphi_0) + \sum \alpha_n \left[ \cos\ \left( 2\ \omega_1\ t - \frac{2\ \pi nt}{T_L} \right) + \cos\ \left( 2\ \omega_1\ t + \frac{2\ \pi nt}{T_L} \right) \right] \right\}$$

avec :

$$\alpha_0 = c_0 = T_N/T_L$$

$$\alpha_n = c_n/2 = \frac{\sin\ (n\pi(T_N/T_L))}{n\pi}$$

$$\varphi_n = n\pi(T_N/T_L)$$

Mais on constate que, dans le cas habituel où $T_N$ est très inférieur à $T_L$, il y a plusieurs signaux qui ont une amplitude très voisine. Par exemple, avec $T_N = 1\ \mu sec$ et $T_L = 64\ \mu$ sec, on obtient :

| n | 0 | 1 | 2 | 3 | 4 |
|---|---|---|---|---|---|
| $\alpha_n$ | 0,156 | 0,150 | 0,132 | 0,105 | 0,074 |

Dans le mode de réalisation de la Figure 3, la composante de fréquence $2\ f_1$ est sélectionnée à l'aide d'un filtre qui doit avoir une bande étroite, de largeur inférieure à $1/T_L$. Une telle largeur de bande peut être obtenue avec un filtre à quartz. Mais, en général, et notamment en radiodiffusion par satellite, la fréquence de la porteuse modulée appliquée à l'entrée du circuit de récupération 16 a une précision inférieure à $1/T_L$. Cela peut se traduire par la sélection d'une raie de fréquence $f_0 \pm n/T_L$, avec $n \neq 0$, ce qui entraîne une erreur de phase importante lors de la démodulation.

On connaît également (US-A-3 525 945) un procédé selon le préambule de la revendication 1. Mais, pour reconstituer la fréquence porteuse, ce procédé connu utilise des salves non modulées courtes intercalées entre des salves de porteuse modulées longues. Seule l'acquisition se fait sur les salves non modulées. Il y a ensuite commutation sur un mode de dédoublage de fréquence pour régénérer la porteuse à partir du signal modulé.

Du fait que l'acquisition s'effectue sur des salves courtes dont la période de répétition semble la même que celle des salves utiles le risque exposé ci-dessus reste entier.

L'invention permet d'écarter les inconvénients des procédés ci-dessus. Dans le procédé suivant l'invention, on émet des salves d'acquisition à la fréquence de la porteuse, présentant des caractéristiques constantes ayant une durée supérieure à celle des salves utiles, avec une période de répétition plus longue d'au moins un ordre de grandeur que la période d'émission des salves utiles de porteuses modulées, et on soumet les salves d'acquisition à élévation au carré et à sélection et identification de la fréquence double de la fréquence porteuse en utilisant la modulation d'amplitude due aux caractéristiques particulières des salves d'acquisition.

L'amplitude du signal de sortie du filtre 20 à bande étroite (figure 3) augmente avec la durée de la salve d'acquisition, ainsi par conséquent que le rapport entre l'amplitude de la raie utile et l'amplitude d'une raie parasite. L'emploi d'une salve d'acquisition de durée $T_S$ supérieure à la durée $T_N$ d'une salve utile de fréquence $f_1$ permet d'obtenir un rapport beaucoup plus élevé entre l'amplitude de la raie utile et l'amplitude d'une raie parasite, du fait que l'amplitude du signal de sortie du filtre 20 à bande étroite augmente avec la durée de la salve.

Ce procédé utilise donc une approche différente de celle décrite dans le document US-A-3 525 945 et met en œuvre des moyens différents. Il utilise une salve d'acquisition longue émise à intervalles élevés pour sélectionner avec certitude la fréquence de porteuse, levant ainsi le risque d'erreur sur la fréquence de porteuse récupérée à partir de salves utiles, entre salves d'acquisition successives.

L'émission de la salve d'acquisition sera commandée par un signal v(t) périodique, de période $T_t$, ayant l'allure montrée en Figure 4 et ayant pour expression :

$$v(t) = 1 \text{ pour } t \in [0, T_s]$$

$$v(t) = 0 \text{ pour } t \in [0, T_s]$$

avec : $T_T \gg T_L$ et $T_s = T_L - T_N$.

Dans l'application du procédé à la radiodiffusion par satellite, le signal v(t) d'acquisition est émis pendant une ligne de la suppression trame et les durées des différents signaux émis peuvent alors être les suivantes :

$T_N = 10 \ \mu s$
$T_L = 64 \ \mu s$
$T_s = 54 \ \mu s$
$T_T = 20 \ ms$

La salve doit correspondre à l'émission de la fréquence $f_1$ et peut donc être constituée par une suite d'éléments binaires au niveau zéro.

Le signal autour de la fréquence $2f_1$ obtenu après élévation au carré de la porteuse modulée par un circuit tel que 18 a pour expression :

$$y_1 (t) = B[u(t) + v(t)] \cos (2 \ \omega_1 \ t + 2 \ \varphi_1)$$

ce qui s'écrit encore :

$$y_1(t) = B [\alpha_0 + V(t)] \cos (2 \ \omega_1 \ t + 2 \ \tilde{\varphi}_1)$$
$$+ B \sum_{n=1}^{\infty} \alpha_n \left[ \cos \left( 2 \ \omega_1 \ t + 2 \ \varphi_1 - \frac{2 \ \pi n t}{T_L} + \varphi_n \right) + \cos \left( 2 \ \omega_1 \ t + 2 \ \varphi_1 + \frac{2 \ \pi n t}{T_L} - \varphi_n \right) \right]$$

Cette dernière formule fait apparaître que la composante de fréquence $2f_1$, et elle seule, est modulée en amplitude par le signal v(t). Cette modulation permet donc d'identifier $f_1$ et de lever l'ambiguïté lors des récupérations de porteuse à partir des salves utiles ultérieures.

Avant d'exposer diverses réalisations que permet d'utiliser cette modulation pour lever l'ambiguïté sur $f_1$, il convient d'indiquer l'action sur le signal $y_1$ d'un filtre rectangulaire de fréquence centrale $f_c$, à bande étroite W telle que $1/T_L > W \gg 1/T_T$ (filtre à quartz par exemple).

La fonction de transfert H(ν) de ce filtre a pour expression :

$$H(\nu) = \begin{cases} 1 & \text{pour } f_c - \dfrac{W}{2} < \nu < f_c + \dfrac{W}{2} \\ 0 & \text{ailleurs} \end{cases}$$

Dans le cas, qui est celui recherché pour le filtre 20 sur la Figure 3, où on a $f_c = 2f_1$, le signal $y_2(t)$ en

4

sortie du filtre a pour expression :

$$y_2(t) = B[\alpha_0 + V_s(t)] \cos (2\omega_1 t + 2\varphi_1)$$

avec

$$V_s(t) \ne WT_s \sum \frac{\sin \pi W(t - kT_T)}{\pi W(t - kT_T)}$$

On constate que l'amplitude de $y_2(t)$ est maximale pour $t = K \cdot T_T$ et a pour valeur $v_{max} = B[\alpha_0 + WT_s]$.

Si, au contraire, on a $f_c = 2f_1 \pm n/T_L$ avec $n \ne 0$ (cas d'une erreur sur la sélection de la raie), l'amplitude du signal $y_2(t)$ a pour valeur $V_s = B\alpha_n$.

Dans l'application à la radiodiffusion par satellite aux normes européennes, où

$$1/T_L = 15625 \text{ Hz et } 1/T_T = 50 \text{ Hz,}$$

On pourra adopter les valeurs suivantes :
Salve utile : $T_N = 10$ μsec
Salve d'acquisition : $T_s = 54$ μsec
Longueur de bande : $W = 10$ KHz.
Ce qui conduit à :

$\alpha_0 + WT_s = 0,696$
$\alpha_1 \qquad = 0,150$
$\alpha_2 \qquad = 0,132$.

On constate que, pour toutes les valeurs de t multiples de $kT_T$, l'amplitude de la composante de fréquence $2f_1$ est supérieure de 13 dB à celle des autres composantes, à fréquence $2f_1 \pm n/T_L$. Il est alors aisé, même en présence de bruit, d'identifier cette raie par une détection d'amplitude suivie, d'une comparaison à un seuil et de réaliser une acquisition de la raie identifiée.

Dans ce cas, la raie à fréquence $(2f_1)$ est aisément identifiable comme celle ayant une amplitude maximale supérieure à un seuil déterminé.

Dans un mode particulier d'exécution de l'invention, on mélange les salves utiles et d'acquisition, après élévation au carré, et le signal de sortie d'un oscillateur à fréquence variable commandé en tension, également porté au carré, et en ce qu'on modifie progressivement la tension de commande de l'oscillateur jusqu'à ce que l'amplitude du signal provenant du mélange et soumis à un filtrage à bande étroite dépasse un seuil prédéterminé. La modification de fréquence de l'oscillateur peut se faire par pas sensiblement égaux à la largeur de bande de filtrage.

L'invention a également pour objet un dispositif de démodulation cohérente de porteuse à modulation numérique par déplacement de phase ou déplacement de fréquence à phase continue, porteuse émise par salves utiles régulièrement espacées dans le temps, avec continuité de phase d'une salve à la suivante. Suivant un mode avantageux de réalisation, ce dispositif comporte des moyens d'élévation au carré de la porteuse à fréquence $(f_1)$ modulée pour faire apparaître la fréquence $(2f_1)$, un filtre à bande étroite d'isolement de fréquence et un diviseur de fréquence par deux. Ce dispositif se caractérise en ce qu'il comprend de plus des moyens pour décaler, avant application au filtre à bande étroite, la fréquence $(2f_1)$ double de la fréquence porteuse d'une quantité ajustable $(2f_1-f_c)$, des moyens pour comparer l'amplitude du signal de sortie du filtre à un seuil, modifier la fréquence de décalage $(f_1-f_c/2)$ jusqu'à ce que l'amplitude dépasse le seuil et figer alors la fréquence de décalage.

L'invention sera mieux comprise à la lecture de la description qui suit de modes particuliers de réalisation de celle-ci, donnés à titre d'exemples non limitatifs. La description se réfère aux dessins qui l'accompagnent, dans lesquels :
les Figures 1, 2 et 3, déjà mentionnées, sont respectivement : un diagramme des temps du multiplex de radiodiffusion par satellite comportant une porteuse analogique modulée en fréquence par le signal d'image et une porteuse numérique émise pendant l'intervalle de suppression ; un diagramme faisant apparaître les salves d'émission de la porteuse modulée ; et un schéma de principe d'un circuit classique de démodulation cohérente,
la Figure 4 est un diagramme montrant la localisation d'une salve d'acquisition de durée $T_S$ au cours de la diffusion,
la Figure 5 est un synoptique d'un circuit de récupération de porteuse comportant un filtre à bande étroite, constituant un premier mode d'exécution de l'invention.
la Figure 6 est un schéma donnant la constitution de certains des composants du synoptique de la Figure 5,
la Figure 7 est un schéma montrant un exemple de réalisation possible du circuit logique de commande de la Figure 5,

la Figure 8 est un synoptique du schéma général d'un récepteur de radiodiffusion par satellite en système C dans lequel peut être utilisé le circuit de récupération de porteuse de la Figure 5,

la Figure 9, similaire à la Figure 5, est un synoptique d'un circuit de récupération de porteuse avec boucle à verrouillage de phase, constituant un autre mode de réalisation de l'invention.

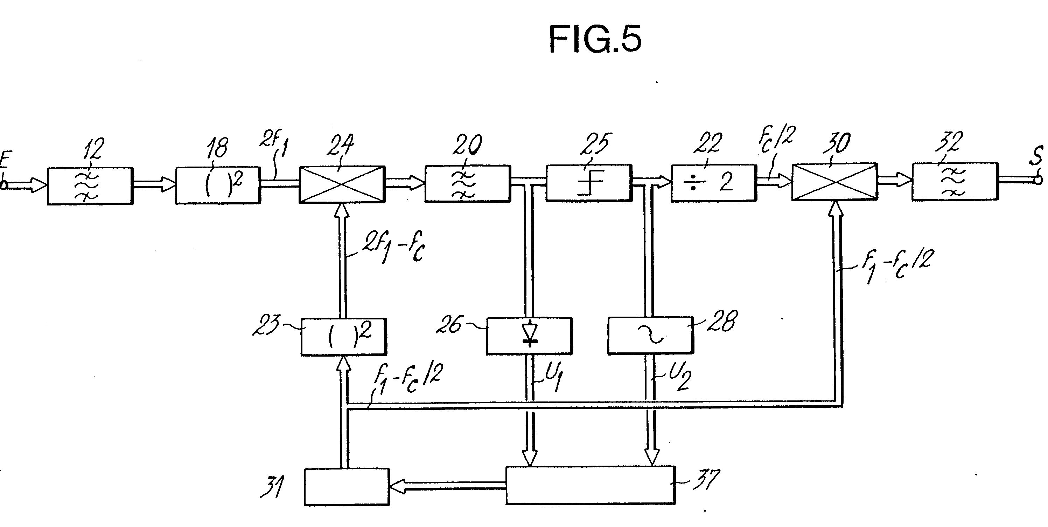

Le circuit de récupération de porteuse dont le synoptique est donné en Figure 5 est du type comportant un filtre à bande étroite, qui sera généralement constitué par un filtre à quartz. Ce circuit, comme celui de la Figure 3, comprend un filtre passe-bande d'entrée 12, suivi par un circuit 18 d'élévation au carré du signal de porteuse modulée qu'il reçoit, de façon à faire apparaître la fréquence $2f_1$ dans son signal de sortie $y_1$. Entre le circuit d'élévation au carré 18 et le filtre à quartz 20 à fréquence centrale $f_c$ est interposé un premier multiplicateur 24. Ce multiplicateur 24 reçoit également un signal de fréquence ($2f_1$-$f_c$) fourni par un second circuit 23 d'élévation au carré, constituant le dernier élément d'une boucle d'acquisition qui sera décrite plus loin.

Le signal de sortie $f_c$ du premier multiplicateur 24 traverse le filtre 20 et est appliqué à un limiteur 25, puis à un diviseur de fréquence par deux 22 qui restitue $f_c/2$ et l'applique à un second multiplicateur 30 qui reçoit de la boucle d'acquisition le signal de fréquence $f_1$-$f_c/2$.

Un filtre $F_{3c}$ 32 élimine la composante de fréquence ($f_1$-$f_c/2$) accompagnant le signal $f_1$ en sortie du multiplicateur 30 et fournit en sortie le signal de fréquence $f_1$ recherché.

La boucle d'acquisition comporte une logique de commande 37 qui élabore un signal de commande d'un oscillateur commandé en tension 31 fournissant la fréquence $f_1$-$f_c/2$ à partir :

— de la tension de sortie $U_1$ d'un détecteur d'amplitude 26, auquel est appliqué le signal provenant du filtre à bande étroite 20,

— de la tension d'erreur $U_2$ élaborée par un discriminateur 28 (discriminateur à quartz en général) qui reçoit le signal de sortie du limiteur 25.

L'oscillateur 31 attaque directement le second multiplicateur 30 et, par l'intermédiaire du circuit 23 d'élévation au carré, le premier multiplicateur 24.

Le rôle de la logique de commande est de fournir une tension permettant, en phase d'acquisition, de faire varier la fréquence de l'oscillateur dans une plage correspondant aux variations maximales de fréquence de la porteuse modulée : lorsque l'acquisition a eu lieu, c'est-à-dire lorsque l'ambiguïté est levée, le balayage s'arrête et le circuit fournit la tension d'asservissement permettant au signal utile de rester centré dans le filtre à quartz.

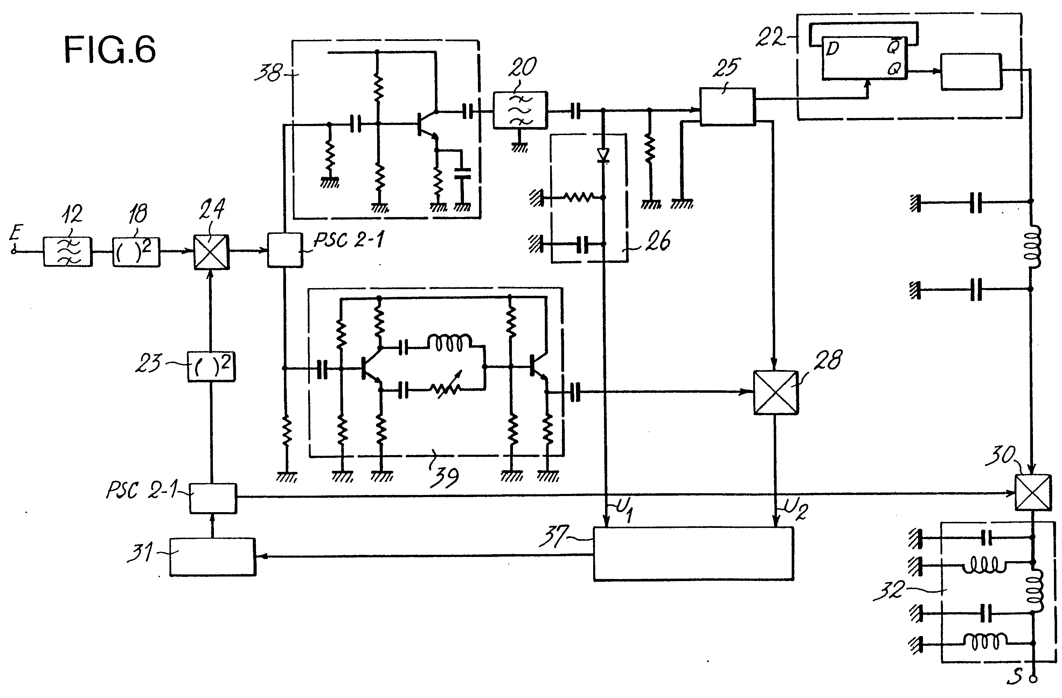

La Figure 6, où les composants correspondant à ceux de la Figure 5 sont désignés par le même numéro de référence, montre une constitution possible de certains de ces composants. Le circuit 18 d'élévation au carré du signal modulé et le circuit 23 d'élévation au carré du signal provenant de l'oscillateur 31 peuvent être constitués par des doubleurs de fréquence de type RK3 suivi d'un amplificateur de type OM350 destiné à compenser les pertes d'insertion du doubleur. Le filtre à bande étroite 20 peut être constitué par un filtre monolithique à quatre pôles à quartz, de fréquence centrale $f_c$ = 21,4 MHz, et de largeur de bande à —3dB égale à 7,5 kHz. Sur la figure 6, ce filtre 20 est précédé d'un amplificateur à transistors 38 d'adaptation d'impédance. Le limiteur 25 peut être un circuit de type NE 529 commercialisé par la société RTC. Le diviseur 22 peut être constitué par une bascule de type D suivie d'un adaptateur d'impédance. Il peut notamment s'agir d'une bascule SN 74 LS 74 suivie d'un adaptateur d'impédance SN 74 128.

Le discriminateur de fréquence 28 peut être constitué par un modulateur en anneau de type SBL 1 faisant le produit du signal en amont du filtre à bande étroite 20 et du signal de sortie du limiteur 25. Le signal en amont du limiteur 20 est prélevé avant l'amplificateur 38. Avant d'être appliqué au discriminateur de fréquence 28, il traverse un déphaseur variable à deux transistors 39, ce qui permet d'ajuster la phase pour avoir une tension de sortie égale à 0 à la fréquence centrale $f_c$ du filtre à quartz.

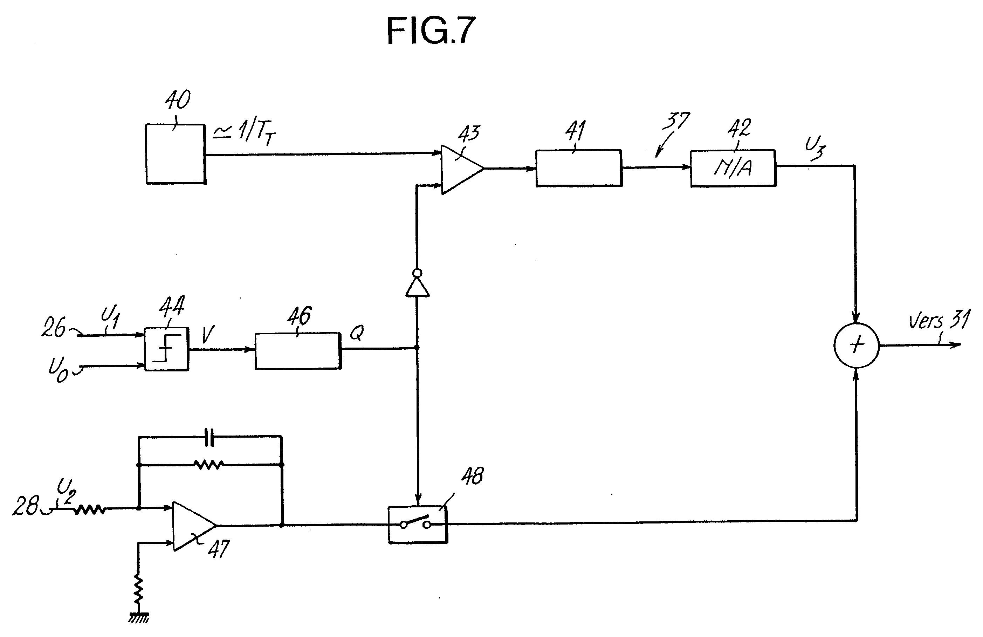

La logique de commande 37 peut avoir toute constitution lui permettant de remplir le rôle défini plus haut. Elle peut notamment correspondre au schéma montré en Figure 7.

La logique 37 de la Figure 7 comporte un oscillateur 40 à fréquence fixe, prévu pour fournir un signal carré de fréquence non réglable voisine de $1/T_T$, qui est appliqué à un compteur incrémental-décrémental 41 et à un convertisseur numérique-analogique 42 qui délivre un signal formé d'une suite d'échelons de tensions telle que chaque saut de tension $\Delta U$ correspond à un saut de fréquence de l'ordre de W (W étant la largeur de bande du filtre à quartz 20). Un circuit logique ET 43 entre l'oscillateur 40 et le compteur 41 constitue une porte qui permet d'arrêter le balayage lorsque l'acquisition a eu lieu.

Le signal $U_1$ obtenu en sortie du détecteur d'amplitude 26 (Figures 5 et 6) est appliqué à un comparateur 44 qui délivre un niveau logique V tel que :

$$V = 0 \text{ si } u_1 < u_0$$

$$V = 1 \text{ si } u_1 > u_0$$

$u_0$ étant une tension de référence appliquée à l'entrée du comparateur.

La condition $u_1 > u_0$ caractérise la détection d'acquisition et indique que le signal utile de fréquence $f_1$ est obtenu en sortie du circuit de récupération de la porteuse.

Le signal logique en sortie du comparateur 44 est constitué d'une suite d'impulsions de période $T_T$ et de durée voisine de $T_s$. Il est appliqué à un monostable redéclenchable 46 qui agit en tant que bloqueur et délivre un niveau constant $Q = 1$ lorsque la suite d'impulsions est présente à l'entrée. La constante de temps $\tau$ du monostable est choisie égale à quelques périodes $T_T$ du signal d'entrée. Par exemple, avec $\tau = 3T_T$, il faudra trois non-reconnaissances successives du signal d'acquisition pour que le niveau se retrouve égal à $Q = 0$ et que le processus d'acquisition soit à nouveau déclenché.

La tension $U_2$ issue du discriminateur de fréquence à quartz 28 est filtrée et amplifiée dans un filtre analogique 47 avant d'être appliquée à un commutateur analogique 48 dont la commande est fournie par le monostable 46 (le commutateur est passant si $Q = 1$).

Le fonctionnement du circuit est le suivant :

— si $u_1 < u_0$, $\forall t$, l'acquisition n'a pas eu lieu. On a $Q = 0$. Le commutateur 48 est bloqué (c'est-à-dire correspond à un circuit ouvert). La fréquence de l'oscillateur commandé en tension 31 est incrémentée d'une quantité $\Delta F = W$ à chaque période de l'oscillateur de balayage, à partir d'une valeur initiale qui peut être choisie inférieure à la valeur attendue de $f_1$-$f_C/2$. Si le compteur atteint sa capacité maximale sans qu'il y ait eu acquisition, il commence à décompter. Dans un autre mode de réalisation, il revient simplement à zéro.

— si $u_1 > u_0$ pour $t = kT_T$, l'acquisition a eu lieu et $Q = 1$.

Le balayage est arrêté, le commutateur 48 est passant et la tension d'asservissement $U_2$ est maintenue appliquée à l'oscillateur commandé en tension.

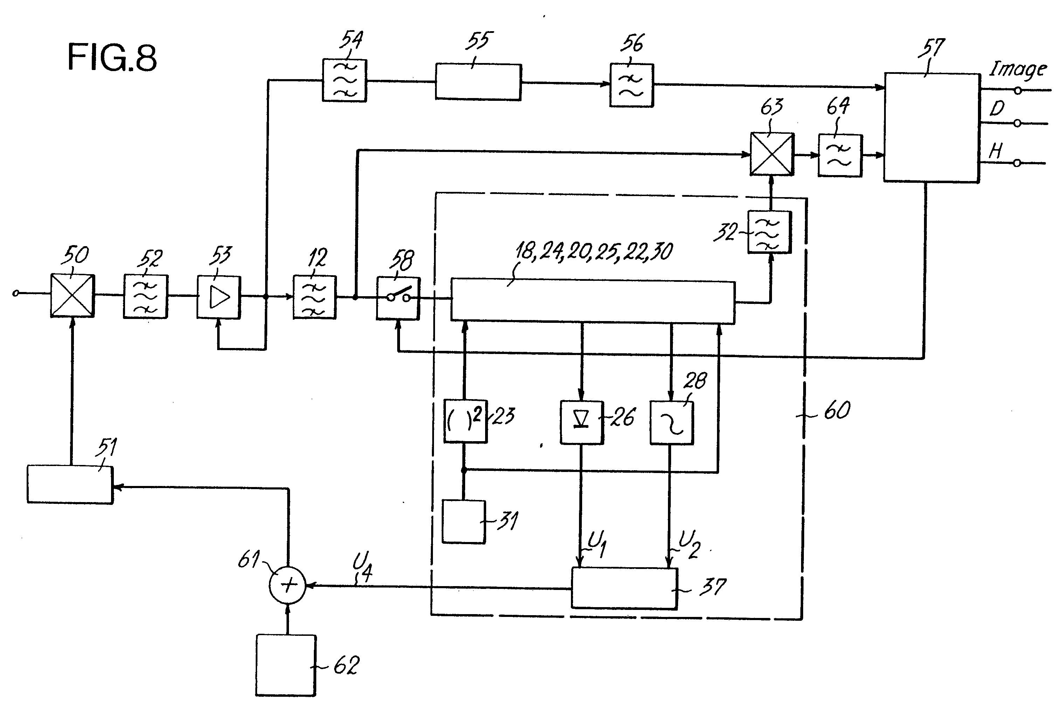

A titre d'exemple d'application de l'invention, on décrira maintenant, en faisant référence à la Figure 8, la constitution générale d'un récepteur de radiodiffusion par satellite en système C incorporant un circuit de récupération du genre montré en Figures 5 et 6.

Le récepteur comporte un mélangeur d'entrée 50 de transposition du signal d'entrée reçu à la première fréquence intermédiaire (autour de 1 GHz) transposé à une deuxième fréquence plus basse (autour de 100 MHz par exemple), par multiplication avec le signal d'un oscillateur local accordé de manière à sélectionner le canal désiré.

Le signal à la sortie du mélangeur 50 est filtré par un filtre passe-bas 52 et est appliqué à un amplificateur 53 muni d'une commande automatique de gain. Le signal d'amplitude constante obtenu en sortie de l'amplificateur 53 est divisé en deux voies.

L'une des voies est soumise au traitement du signal d'image et à la synchronisation trame. Etant de type bien connu, ce traitement ne sera pas décrit en détail et il suffit de rappeler que la voie de traitement réalise les fonctions suivantes :

— filtrage de canal (filtre analogique 54 sur la Figure 8),
— démodulation de fréquence (démodulateur FM analogique 55),
— amplification et filtrage du signal d'image démodulé (filtre 56),
— récupération d'horloge, synchronisation trame et création de la base de temps (unité 57 de traitement des signaux analogiques et numériques).

L'autre voie en sortie de l'amplificateur 53 assure la démodulation cohérente du signal numérique. Elle comporte un filtre d'entrée passe-bande 12, suivi d'un interrupteur 58 représenté sous forme d'un élément mécanique pour simplifier. Lorsque le mot de synchronisation trame a été reconnu par l'unité de traitement 57, la base de temps génère un signal de commande de l'interrupteur 58 qui permet d'appliquer le signal au démodulateur numérique seulement pendant la durée des salves numériques.

Le filtre 12 pourra être un filtre de type Gaussien jusqu'à -6dB à trois pôles tels que $B = 0,65/T$ (B étant la largeur de bande à -3dB du filtre). Le signal issu du filtre est à son tour divisé en deux voies.

L'une des voies est appliquée au circuit de récupération de porteuse 60, du type montré en Figures 5 et 6, qui délivre la porteuse récupérée de fréquence $f_0$-1/4T. Dans ce cas, l'oscillateur 31 du circuit de récupération de porteuse est fixe (oscillateur à quartz) et la tension d'erreur $U_4$ en sortie du circuit logique de commande 37 est appliquée à l'oscillateur local de transposition 51, ajoutée dans un sommateur 61 au signal de sélection de canal fourni par un organe préalable de sélection 62.

L'autre voie de sortie du filtre 12 comporte un mélangeur qui reçoit sur son autre entrée la porteuse récupérée et délivre en sortie, après filtrage passe-bas en 64, le signal numérique démodulé.

On décrira maintenant de façon succincte le fonctionnement du circuit de récupération de porteuse, dans le cas où il est incorporé à un récepteur de radiodiffusion du genre montré en Figure 8.

Lors de la mise sous tension du récepteur, l'utilisateur doit présélectionner la fréquence de l'oscillateur local 51 sur le canal désiré, à l'aide de l'organe de sélection 62. Le circuit logique de commande 37 va alors intervenir pour faire varier la fréquence de l'oscillateur 51, si nécessaire, de part et d'autre de la fréquence présélectionnée.

L'acquisition se fait en deux étapes.

Au cours de la première étape, il y a reconnaissance du mot de synchronisation trame par l'unité de traitement 57. Lorsque ce mot de synchronisation a été reconnu, la base de temps de l'unité 57 génère un signal qui est appliqué à l'interrupteur 58 pour le rendre passant. Les salves numériques sont alors envoyées au circuit de récupération de porteuse.

Au cours de la seconde étape, il y a identification du signal d'acquisition de porteuse par le circuit 60, par identification de celle des raies qui est modulée en amplitude. Le balayage en fréquence se poursuit jusqu'à ce que le signal d'acquisition de porteuse ait été reconnu. Dès cette reconnaissance effective, il y a arrêt du balayage en fréquence par blocage de l'interrupteur 58 et mise en service du circuit de contrôle automatique de fréquence. Le récepteur est alors en fonctionnement stabilisé et fournit les données numériques à 20, 25 Mbits par seconde au circuit de traitement.

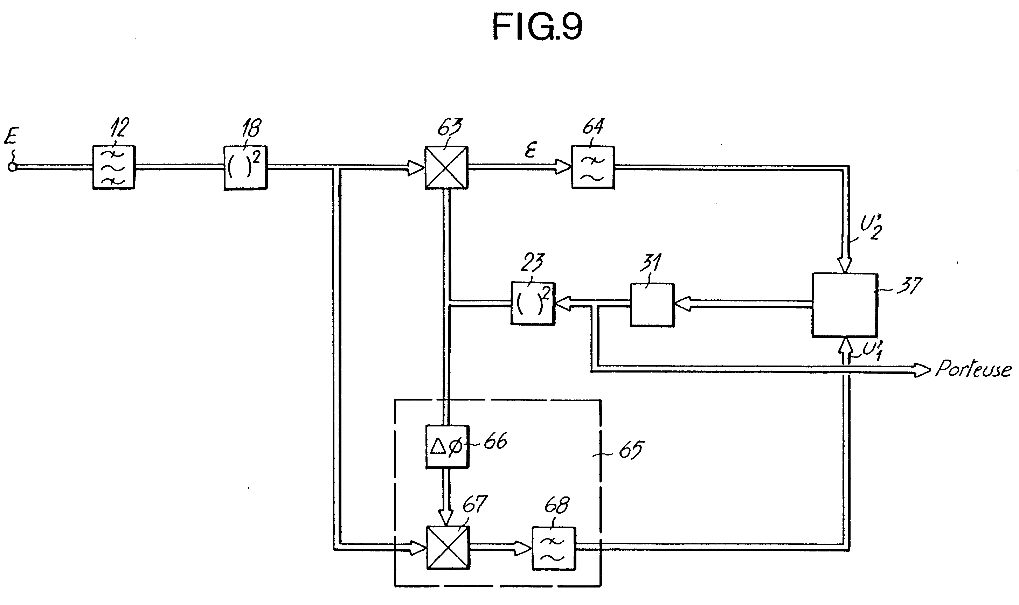

Dans la variante de réalisation de l'invention montrée en Figure 9, où les organes correspondant à ceux de la Figure 5 sont désignés par le même numéro de référence, la récupération de porteuse est assurée par une boucle à verrouillage de phase.

Dans la variante de la Figure 9, l'oscillateur commandé en tension 31 a une fréquence de repos voisine de $f_1$. Le signal de sortie de l'oscillateur est appliqué à un circuit d'élévation au carré 23 destiné à faire apparaître une porteuse de fréquence $2f_1$ qui est appliquée à l'une des entrées d'un comparateur de phase 63 qui se substitue au multiplicateur 24 de la Figure 5. L'autre entrée du comparateur de phase 63 reçoit la porteuse numérique modulée après élévation au carré par le circuit 18.

La tension de sortie $\varepsilon$ du comparateur de phase 63, d'amplitude proportionnelle à la différence de phase des signaux d'entrée, est appliquée à un filtre passe-bas 64 dont la tension de sortie $U'_2$ constitue la tension d'erreur appliquée à la logique de commande 37 pour permettre l'asservissement en phase du signal de l'oscillateur au cours de l'étape d'acquisition.

Le circuit de détection d'acquisition 65 est cette fois constitué par un déphaseur 66, un comparateur de phase 67 et un filtre passe-bas 68 dont la bande passante W doit être telle que

$$1/T_T << W < 1/T_L$$

Le comparateur de phase 67 est utilisé comme détecteur synchrone d'amplitude. Dans le cas où la différence de fréquence entre la porteuse modulée et la porteuse issue de l'oscillateur 31 est inférieure à $1/T_L$, le signal $u'_1$ obtenu en sortie du filtre 68 est formé d'une suite d'impulsions de période $T_T$.

Les signaux $u'_1$ et $u'_2$ sont appliqués au circuit logique de commande 37 qui fournit la tension de commande de l'oscillateur et peut être celui de la Figure 8.

Lorsque l'acquisition a eu lieu, la tension $U'_2$ est appliquée à l'entrée de l'oscillateur 31 qui est alors asservi en phase avec la porteuse modulée, la différence de phase étant égale à $\pi/2$. Le déphaseur 66 de valeur égale à $\pi/2$ est donc nécessaire pour obtenir en sortie du comparateur de phase 66 une tension maximale lorsque l'acquisition a eu lieu : la fréquence de porteuse récupérée est alors fournie par l'oscillateur 31.

Dans tous les cas, le dispositif assure la levée d'ambiguïté en décalant la fréquence porteuse par mélange avec la fréquence fournie par un oscillateur local, de façon que la raie centrale de la fréquence résultante corresponde à la bande passante du filtre qui isole donc à coup sûr la fréquence porteuse. Au cours d'une phase d'acquisition, la fréquence de l'oscillateur local est modifiée progressivement, généralement par pas sensiblement égaux à la largeur de bande du filtre, jusqu'à ce que l'amplitude maximale relevée à la sortie du filtre à bande étroite dépasse un seuil prédéterminé, choisi pour se placer entre la valeur correspondant à l'isolement, par le filtre, de la raie centrale de la salve d'acquisition et celle correspondant à l'isolement, par le filtre, d'une raie latérale. Une fois l'acquisition réalisée, la fréquence de l'oscillateur local est conservée et la récupération de porteuse s'effectue sur les salves utiles, comme dans un dispositif classique.

## Revendications

1. Procédé de démodulation cohérente de porteuse à modulation numérique par déplacement de phase ou déplacement de fréquence à phase continue, porteuse émise par salves utiles régulièrement espacées dans le temps, avec continuité de phase d'une salve à la suivante, procédé suivant lequel on récupère la fréquence ($f_1$) de porteuse par élévation au carré de la porteuse et sélection de la fréquence de porteuse dans le spectre obtenu, caractérisé en ce qu'on émet des salves d'acquisition à la fréquence ($f_1$) de la porteuse, présentant des caractéristiques constantes ayant une durée (TS) supérieure à celle (TN) des salves utiles, avec une période de répétition ($T_T$) plus longue d'au moins un ordre de grandeur que la période d'émission ($T_L$) des salves utiles de porteuse modulée, et en ce qu'on soumet les salves d'acquisition à élévation au carré et à sélection et identification de la fréquence ($2f_1$) double de la fréquence porteuse en utilisant la modulation d'amplitude due aux caractéristiques particulières des salves d'acquisition.

2. Procédé selon la revendication 1, caractérisé en ce que l'on constitue la salve d'acquisition par une suite d'éléments binaires au niveau 0 et en ce qu'on identifie la raie à la fréquence ($2f_1$) double de la fréquence porteuse comme celle ayant une amplitude maximale supérieure à un seuil déterminé.

3. Procédé selon la revendication 2, caractérisé en ce qu'on mélange, d'une part, les salves utiles et d'acquisition, après élévation au carré, et, d'autre part, le signal de sortie d'un oscillateur à fréquence variable commandé en tension (31), également porté au carré, et en ce qu'on modifie progressivement la tension de commande de l'oscillateur (31) jusqu'à ce que l'amplitude du signal provenant du mélange et soumis à un filtrage à bande étroite dépasse un seuil déterminé.

4. Procédé selon la revendication 3, caractérisé en ce qu'on modifie la fréquence de l'oscillateur par pas sensiblement égaux à la largeur de bande de filtrage.

5. Procédé selon l'une quelconque des revendications précédentes, destiné à la récupération de porteuse dans le signal diffusé de radiodiffusion par satellite consistant en un multiplexage temporel d'une porteuse analogique modulée en fréquence par le signal d'image pendant la durée active d'une ligne de télévision et d'une porteuse numérique émise pendant l'intervalle de suppression ligne caractérisé en ce qu'on émet chaque salve d'acquisition pendant une ligne de la suppression trame.

6. Dispositif de démodulation cohérente utilisable pour mettre en œuvre le procédé suivant la revendication 1, comprenant des moyens (18) d'élévation au carré de la porteuse à fréquence $(f_1)$ modulée pour faire apparaître la fréquence par deux (22), caractérisé en ce qu'il comprend de plus des moyens (31, 23, 24) pour décaler, avant application au filtre à bande étroite (20), la fréquence $(2f_1)$ double de la fréquence porteuse d'une quantité ajustable $(2f_1-f_c)$, des moyens (26, 37) pour comparer l'amplitude du signal de sortie du filtre à un seuil, modifier la fréquence de décalage $(f_1-f_2/2)$ jusqu'à ce que l'amplitude dépasse le seuil et figer alors la fréquence de décalage.

7. Dispositif selon la revendication 6, caractérisé en ce que les moyens pour comparer l'amplitude à un seuil et commander la variation de la fréquence de décalage comportent une logique (37) reliée par un détecteur d'amplitude (26) à la sortie du filtre à bande étroite (20), prévue pour fournir une tension variable de commande d'accroissement de la tension appliquée à un oscillateur (31) de génération de la fréquence de décalage pour provoquer l'augmentation de cette fréquence aussi longtemps que le seuil n'est pas atteint, et maintenir ensuite la tension appliquée.

8. Dispositif selon la revendication 7, caractérisé en ce que la logique (37) comprend un comparateur (44) de comparaison d'amplitude $(U_1)$ avec un seuil prédéterminé $(U_0)$, dont la sortie commande la fermeture d'un circuit (40, 43, 41, 42) d'augmentation progressive de la tension de commande de l'oscillateur (31) aussi longtemps que le seuil n'est pas atteint.

9. Dispositif selon la revendication 8, caractérisé en ce que la sortie du comparateur commande également un interrupteur (48) destiné à ajouter, à la tension de commande de l'oscillateur, une tension de correction fournie par un discriminateur de fréquence (28) à partir du signal ayant traversé le filtre à bande étroite (20) et un limiteur d'amplitude (25).

10. Dispositif de démodulation cohérente utilisable pour mettre en œuvre le procédé selon la revendication 1, comprenant des moyens (18, figure 9) d'élévation au carré de la porteuse à fréquence $(f_1)$ modulée pour faire apparaître la fréquence $(2f_1)$, et un filtre d'isolement de fréquence (64), caractérisé en ce qu'il comprend des moyens pour mélanger, avant application au filtre (64), la fréquence $(2f_1)$ double de la fréquence porteuse à une fréquence double de la fréquence fournie par un oscillateur local (31) commandé en tension afin de créer un signal d'erreur, une logique de commande capable d'élaborer la tension de commande de l'oscillateur (37) à partir du signal de sortie du filtre (64) et du signal de sortie d'une boucle à verrouillage de phase (65) qui reçoit le signal à fréquence double de la fréquence porteuse et le signal à fréquence double de la sortie de l'oscillateur local.

**Claims**

1. Method of coherent demodulation of a digitally modulated carrier modulated by phase shift keying or frequency shift keying with phase continuity, the carrier being transmitted as useful bursts distributed at equal time intervals with phase continuity from each burst to the next, process including recovering the frequency $(f_1)$ of the carrier by squaring the carrier and selecting the carrier frequency within the obtained spectrum characterized in that acquisition bursts at the frequency $(f_1)$ of the carrier are transmitted, with constant characteristic features having a duration (Ts) higher than the duration $(T_N)$ of useful bursts, with a repetition period $(T_T)$ longer than the duration of emission $(T_L)$ of the useful burst of modulated carrier by at least one order of magnitude and in that the acquisition bursts are subjected to squaring and to selection and identification of the frequency $(2f_1)$ which is double the carrier frequency by using the amplitude modulation due to the particular features of the acquisition bursts.

2. Method according to claim 1, characterized in that the acquisition burst is constituted of a sequence of bits of 0 level and in that the line at the frequency (2f1) double of the carrier frequency is identified as having a maximum amplitude which is higher than a predetermined threshold.

3. Method according to claim 2, characterized in that, on the one hand, the useful bursts and acquisition bursts after they have been squared and on the other and the output signal of a voltage controlled variable frequency oscillator (31), which is also squared, are mixed and in that the control voltage of the oscillator (31) is progressively modified until the amplitude of the signal resulting from mixing and subjected to narrow band filtering exceeds a predetermined threshold.

4. Method according to claim 3, characterized in that the oscillator frequency is modified by steps substantially equal to the width of the filtering band.

5. Method according to any one of the preceding claims for recovery of the carrier within a satellite broadcast signal consisting of a time multiplex of an analog carrier frequency modulated by an image signal during the active time duration of a TV line and a digital carrier sent during the line blanking, characterized in that each acquisition burst is sent during one line of the frame blanking.

6. Coherent demodulation device suitable for carrying out the method according to claim 1, comprising means (18) for squaring the frequency $(f_1)$ modulated carrier for frequency doubling (22), characterized in that it further comprises means (31, 23, 24) for shifting the frequency $(2f_1)$ double of the

0 140 753

carrier frequency by an adjustable amount $(2f_1-f_c)$, before it is applied to the narrow band filter (20), means (26, 37) for comparing the amplitude of the output signal of the filter with a threshold, for modifying the amount of frequency offset $(f_1-f_2/2)$ until the amplitude exceeds the threshold and for then locking the offset frequency.

7. Device according to claim 6, characterized in that the means for comparing the amplitude to a threshold and for controlling the variation of the offset frequency comprises a logic circuit (37) connected by an amplitude detector (26) to the output of the narrow band filter (20), arranged for delivering a variable voltage for increasing the voltage applied to an oscillator (31) which generates the offset frequency for causing an increase of said frequency as long as the threshold is not attained and for maintaining the applied voltage thereafter.

8. Device according to claim 7, characterized in that the logic circuit (37) comprises a comparator (44) for comparing the amplitude $(U_1)$ with the predetermined threshold $(U_0)$ whose output controls activation of a circuit (40, 43, 41, 42) which progressively increases the control voltage of the oscillator (3) as long as the threshold is not attained.

9. Device according to claim 8, characterized in that the output of the comparator further controls a switch (48) for summing the control voltage of the oscillator and a correction voltage delivered by a frequency discriminator (28) and generated from a signal obtained through the narrow band filter (20) and an amplitude limiter (25).

10. Device for coherent demodulation suitable for carrying out the process according to claim 1, comprising means (18 — Figure 9) for squaring the modulated carrier at frequency $(f_1)$ and generating frequency $(2f_1)$ and a frequency separating filter (64), characterized in that it comprises means for mixing the frequency $(2f_1)$ double of the carrier frequency with a frequency double of the frequency delivered by a voltage controlled local oscillator (31) before application to the filter (64) for generating an error signal, a control logic arranged for generating the oscillator (37) control voltage from the output signal of the filter (64) and from the output signal of phase lock loop (65) which receives the signal at a frequency double of the carrier frequency and the signal at a frequency double of the output of the local oscillator.

**Patentansprüche**

1. Verfahren zur kohärenten Demodulation eines durch Verschieben der Phase oder durch Verschieben der Frequenz bei beibehaltener Phase numerisch modulierten Trägers, wobei der Träger in zeitlich regelmäßig beabstandeten nutzbaren Stößen bei Beibehaltung der Phase eines Stoßes bis zum folgenden ausgesandt wird, bei welchem Verfahren man die Frequenz (f1) des Trägers durch Quadrieren des Trägers und Wählen der Frequenz des Trägers im erhaltenen Spektrum rückgewinnt, dadurch gekennzeichnet, daß man Akquisitionsstöße mit der Frequenz (f1) des Trägers, die konstante Kennwerte zeigen und eine Dauer (TS) größer als die (TN) der nutzbaren Stöße haben, mit einer Wiederholungsfrequenz (TT) aussendet, die um wenigstens eine Größenordnung länger als die Aussendeperiode (TL) der nutzbaren Stöße des modulierten Trägers ist, und daß man die Akquisitionsstöße einer Quadrierung und einer Auswahl und Identifizierung der doppelten Frequenz $(2f_1)$ der Trägerfrequenz unter Verwendung einer Amplitudenmodulation nach Maßgabe der besonderen Kennwerte der Akquisitionsstöße unterwirft.

2. Verfahren nach Anspruch 1, dadurch gekennzeichnet, daß man einen Akquisitionsstoß aus einer Folge von binären Elementen auf dem Pegel 0 bildet und den Kanal mit der doppelten Frequenz $(2f_1)$ der Trägerfrequenz darüber identifiziert, daß dieser eine maximale Amplitude hat, die über einem bestimmten Schwellenwert liegt.

3. Verfahren nach Anspruch 2, dadurch gekennzeichnet, daß man einerseits die nutzbaren Stöße und die Akquisitionsstöße nach der Quadrierung und andererseits das Ausgangssignal eines spannungsgesteuerten Oszillators (31) mit variabler Frequenz mischt, das gleichfalls ins Quadrat gesetzt wird, und daß man fortschreitend die Steuerspannung des Oszillators (31) so lange modifiziert, bis die Amplitude des Signals, das aus dem Mischen hervorgeht und einer Schmalbandfilterung unterworfen wurde, einen bestimmten Schwellenwert überschreitet.

4. Verfahren nach Anspruch 3, dadurch gekennzeichnet, daß man die Frequenz des Oszillators in Schritten modifiziert, die im wesentlichen gleich der Breite des Filterbandes sind.

5. Verfahren nach einem der vorhergehenden Ansprüche, zum Wiedergewinnen des Trägers in einem Signal, das vom Rundfunk über einen Satelliten ausgesandt wird, und aus einem Zeitmultiplex eines Trägers, der analog mit einem Bildsignal während der aktiven Dauer einer Fernsehbildzeile frequenzmoduliert ist, und einem numerischen Träger besteht, der während des Austastintervalls ausgesandt wird, dadurch gekennzeichnet, daß man jeden Akquisitionsstoß während einer Zeile der Bildaustastung aussendet.

6. Vorrichtung zur kohärenten Demodulation verwendbar zum Durchführen des Verfahrens nach Anspruch 1 mit einer Einrichtung (18) zum Quadrieren des modulierten Trägers mit einer Frequenz (f1), um die doppelte Frequenz $(2f_1)$ erscheinen zu lassen, dadurch gekennzeichnet, daß sie weiterhin Einrichtungen (31, 23, 24) zum Verschieben der doppelten Frequenz $(2f_1)$ der Trägerfrequenz um einen einstellbaren Wert $(2f_1-f_c)$ vor dem Anlegen an ein Schmalbandfilter (20), und Einrichtungen (26, 27) zum Vergleichen der Amplitude des Ausgangssignals des Filters mit einem Schwellenwert, zum Modifizieren

der Verschiebungsfrequenz ($f_1$-$f_2$/2) bis die Amplitude den Schwellenwert überschreitet und zum dann erfolgenden Festlegen der Verschiebungsfrequenz umfaßt.

7. Vorrichtung nach Anspruch 6, dadurch gekennzeichnet, daß die Einrichtungen zum Vergleichen der Amplitude mit einem Schwellenwert und zum Befehlen der Änderung der Verschiebungsfrequenz ein Logikglied (37) aufweisen, das über einen Amplitudendetektor (26) mit dem Ausgang des Schmalbandfilters (20) verbunden ist, das dazu vorgesehen ist, eine variable Steuerspannung mit zunehmender Höhe zu liefern, die an einem Oszillator (31) zum Erzeugen der Verschiebungsfrequenz liegt, um die Zunahme dieser Frequenz genauso lange, wie der Schwellenwert nicht erreicht ist, hervorzurufen, und die anliegende Spannung danach beizubehalten.

8. Vorrichtung nach Anspruch 7, dadurch gekennzeichnet, daß das logische Glied (37) einen Komparator (44) zum Vergleichen der Amplitude ($U_1$) mit einem bestimmten Schwellenwert ($U_0$) umfaßt, dessen Ausgang das Schließen eines Schaltkreises (40, 43, 41, 42) zum fortschreitenden Erhöhen der Steuerspannung des Oszillators (31) so lange, wie der Schwellenwert nicht erreicht ist, befiehlt.

9. Vorrichtung nach Anspruch 8, dadurch gekennzeichnet, daß der Ausgang des Komparators gleichfalls einen Unterbrecher (48) ansteuert, der dazu bestimmt ist, zur Steuerspannung des Oszillators eine Korrekturspannung hinzuzuaddieren, die von einem Frequenzdiskriminator (28) auf der Grundlage eines Signals geliefert wird, das über das Schmalbandfilter (20) und einen Amplitudenbegrenzer (35) gegangen ist.

10. Vorrichtung zur kohärenten Demodulation zur Verwendung zum Durchführen des Verfahrens nach Anspruch 1, mit Einrichtungen (18, Fig. 9) zum Quadrieren des modulierten Trägers mit einer Frequenz (f1), um die Frequenz (2$f_1$) auftreten zu lassen, und einem Frequenztrennfilter (64), dadurch gekennzeichnet, daß sie Einrichtungen, die vor dem Anlegen an das Filter (64) die doppelte Frequenz (2$f_1$) der Trägerfrequenz mit einer doppelten Frequenz einer Frequenz mischt, die von einem Überlagerungsoszillator (31) geliefert wird, der spannungsgesteuert ist, um ein Fehlersignal zu erzeugen, und ein logisches Steuerglied aufweist, das die Steuerspannung des Oszillators (37) auf der Grundlage des Ausgangssignals des Filters (64) und des Ausgangssignals einer Phasenverriegelungsschleife (65) bilden kann, die das Signal mit der doppelten Frequenz der Trägerfrequenz und das Signal mit der doppelten Frequenz des Ausgangssignals des Überlagerungsoszillators empfängt.

**0 140 753**

# FIG.1

$T_L - T_M$ (54 $\mu$ sec)    $T_M$ (10 $\mu$ sec)

11    10

$T_L$

(64 $\mu$ sec : durée d'une ligne de télévision)

# FIG.2

$u(t)$

1

$T_M$

0

$T_L$

$t$

# FIG.3

E    12

16

$y(t)$    $y_2$

( )²    ÷2    $f_0$

18    20    22

14    18    S

# FIG.4

$v(t)$

1

$T_S$

$T_T$

$t$

1

# FIG.5

FIG.6

PSC 2-1

PSC 2-1

0 140 753

FIG.7

# FIG.8

0 140 753

# FIG.9

0 140 753